(19) Europäisches Patentamt
European Patent Office
Office européen des brevets

(11) **EP 1 646 525 B1**

(12) **EUROPEAN PATENT SPECIFICATION**

(45) Date of publication and mention
of the grant of the patent:
**24.12.2008 Bulletin 2008/52**

(51) Int Cl.:
***B60L 3/00*** *(2006.01)*   ***B60L 3/12*** *(2006.01)*
***G05B 9/02*** *(2006.01)*

(21) Application number: **04740000.7**

(22) Date of filing: **17.06.2004**

(86) International application number:
**PCT/EP2004/006541**

(87) International publication number:
**WO 2005/014329 (17.02.2005 Gazette 2005/07)**

(54) **MONITORING AN OPERATION OF A CONVERTER**

DIAGNOSE-ERMITTLUNG EINES STROMRICHTERBETRIEBES

SURVEILLANCE DU FONCTIONNEMENT D'UN CONVERTISSEUR

(84) Designated Contracting States:
**AT BE BG CH CY CZ DE DK EE ES FI FR GB GR HU IE IT LI LU MC NL PL PT RO SE SI SK TR**

(30) Priority: **17.07.2003 GB 0316709**

(43) Date of publication of application:
**19.04.2006 Bulletin 2006/16**

(73) Proprietor: **Bombardier Transportation GmbH 10785 Berlin (DE)**

(72) Inventor: **GEBHARDT, Sven 79761 Waldshut (DE)**

(74) Representative: **Brunotte, Joachim Wilhelm Eberhard Patentanwälte Bressel und Partner Radickestrasse 48 12489 Berlin (DE)**

(56) References cited:
WO-A-00/72100          DE-C- 4 032 056
US-A- 5 842 143        US-A1- 2003 114 969
US-B1- 6 242 873

## Description

The present invention relates to a method of monitoring an operation of a converter. Furthermore, the present invention relates to an arrangement for monitoring an operation of a converter. The converter may be, for example, a current converter, a voltage converter, a DC/AC-converter or an inverter. In particular, the present invention relates to the field of electric high power applications, such as the delivery of electric energy to a driving motor of a rail vehicle by using a converter connected via a three-phase alternating current connection to the driving motor.

For many applications a converter, which is connected to an electric load, comprises a direct current side and an alternating current side with three alternating current phases. The direct current side is connected to a direct current intermediate circuit. The electric load is connected to the three alternating current phases on the alternating current side. A controlling device controls the operation of the converter, wherein the phase currents of the three alternating current phases are used as input variables of the controlling process. For example, it is possible to use a controlling device, which is adapted to output pulse width modulation (PWM) signals. The PWM signals are transferred to the converter and effect the switching of electronic valves of the converter. If the electric load is an electromagnetic machine, it can be supplied with electric energy from the converter via the three phases of the alternating current (AC) connection. In addition or alternatively, electric energy can be fed back from the electromagnetic machine to the converter via the AC connection.

There are several errors and malfunctions that might occur during the operation of the arrangement: One or more of the three phases of the alternating current connection could be interrupted or the converter itself might malfunction. One or more of the three phases might be connected to ground. Furthermore, a sensor, which is used to detect a phase current of one of the phases, might be defect and/or an energy supply for operating the sensor could fail. A signal connection from the detector to the controlling device could be interrupted or not realised (possibly due to a loose connector). In addition, or alternatively, any device (such as an amplifier), which is used to process the signal from the detector, could be defect or might not be adjusted correctly.

If there is a malfunction of measuring the phase currents (including a malfunction of processing the measuring signal), the controlling device will use a wrong input value and, as a consequence, the controlling device will try to adapt the phase current. In other words: the controlling device will output control signals to the converter in order to compensate the wrong input value. If the measured phase current is permanently too small (e. g. zero due to a failure of the detection), the converter can be damaged or even destroyed.

In many applications, the electric load is symmetric with respect to the three alternating current phases. The expression "the load is symmetric with respect to the three alternating current phases" means that the root mean square (RMS) value of the electric currents carried by the three phases should be equal at every point of time. Examples are a star-connected load and a delta-connected load, wherein (in the latter case) the load comprises the same resistance and the same inductivity between each pair of phases. However, there might be a small deviation of the sum from zero in some cases, for example in the case of a delta-connected load. This deviation is acceptable, if a specified tolerance level is not exceeded. Particularly with a star-connected load, the sum of the three phase currents of the converter output is zero, if there is no failure, such as a connection to ground (earth).

If the sum of the three phase currents should be zero, it is possible to measure all three phase currents, to calculate the sum of the three phase currents and to compare the sum with a threshold value. If the threshold value is exceeded, it can be concluded that there is a failure. In order to avoid false alarm, the mean or filtered value of the sum can be compared with the threshold value. If the threshold value is exceeded, appropriate actions can be taken, such as switching off the converter and thereby stopping the operation of the electromagnetic machine.

However, other failures or malfunctions, such as short circuits in a coil of the electric load (for example in windings of an electromagnetic machine) or other non-symmetrical behaviour of the load, cannot be detected with this method.

Furthermore, one of the three current sensors and other corresponding devices for processing the sensor signal have been omitted in order to save costs. As a result, the procedure described before cannot be applied. One possibility to check the function of the sensor signal processing in such an arrangement is to use an extra test coil in each sensor and to generate a signal current in the signal line by induction. The signal current can then be processed and the function of the corresponding processing devices can be checked.

According to another method the electric power, which is transferred from the converter to an electromagnetic machine, is determined and compared with the mechanical power produced by the machine. Performing this method requires the consideration of energy conversion losses of the machine. Furthermore, an appropriate action cannot be taken sufficiently fast in practice, if there is a malfunction in detecting at least one of the phase currents or if the corresponding phase is interrupted.

It is an object of the present invention to provide a method of monitoring a converter, wherein an electric load is connected to the converter on an alternating current side, making it possible to detect failures and/or malfunctions in the arrangement speedily in order to prevent damage. Preferably, the method should be able to detect non-symmetrical behaviour of the measured values with respect to three alternating current phases. Furthermore, it is desired to provide a method, which can be performed at low costs and/or can be implemented in existing arrangements at low costs. Furthermore, it is an object of the present invention to provide a corresponding arrangement.

It is proposed to use a mathematical model, which is capable of modelling an operation of the electric load. The converter comprises an alternating current side with three alternating current phases. The electric load is connected to the three alternating current phases. In particular, the electric load is a driving motor of a rail traction vehicle. In addition or alternatively the model may be capable of modelling an operation of the electric load including an operation of the converter. Document US 6242873 describes the control of a series hybrid vehicle by using an adaptive and predictive control scheme for the load requirements, but not for checking sensor data.

Electric phase currents of at least two of the phases are measured and corresponding measured current values are used to control the operation of the converter. According to a first aspect of the invention the mathematical model is used to calculate at least one current value of at least one of the phase currents during operation of the converter and it is checked by using the at least one calculated current value whether at least one of the electric phase currents and/or a corresponding measured current value is plausible and/or is leading to plausible results of the operation of the converter. The term "calculated current value" includes any numerical value or signal, which represents the current.

These objects are solved by the features of Method claim 1 and device claim 6. The dependent claims recite advantageous embodiments of the invention.

In a specific embodiment, the arrangement may include the converter, wherein a control signal input of the converter is connected to the control signal output of the controlling device. In addition or alternatively, the electric load may be an electromagnetic three-phase alternating current machine, in particular an asynchronous motor, wherein the arrangement comprises the electromagnetic machine and wherein the electromagnetic machine is connected to the three phases of the three-phase alternating current connection.

Mathematical models, which may be implemented in software that is used to operate a microcomputer, are known from prior art. For example, DE 195 31 771 Al (inventor: Depenbrock) describes a method and a device for determining a rotational speed of a rotating field machine. The document discloses that signal processing comprises a complete machine model including a converter, an alternating current side of which is connected to the machine. The machine model uses parameters of the machine (which may depend on temperature), the rotational speed of the machine, an electric voltage on a direct current side of the converter and control signals for controlling the converter. In particular, the machine model is capable of calculating the electric phase currents carried by the stator of the machine.

Alternative models may be used, which may not be based on measuring the rotational speed of the machine, for example.

According to the invention, the mathematical model is used to check the plausibility of at least one of the phase currents in the manner described above. In particular, the controlling device performs the plausibility check. Preferably, the plausibility check is performed using a computer and software for operating the computer, wherein the computer is part of the controlling device. It is proposed to repeatedly perform the plausibility check, e.g. in every operation cycle of the controlling device.

Non-plausible values may occur for different reasons, as the failures and/or malfunctions mentioned above demonstrate by way of example. It is not absolutely necessary to perform the plausibility check by comparing the calculated phase currents with a phase current, which is based on measurement. Rather, it is also possible to analyse the development of the calculated phase current with time and to detect unusual behaviour. The analysis is possible as the model can obtain information about the controlling process performed by the controller (e.g. obtains information about the control signals).

However, in case of preferred embodiments, which are described in detail later, the at least one calculated electric phase current is compared with a corresponding measured current value. In the arrangement, this corresponds to an embodiment wherein the checking means are connected to the modelling means and to the at least two sensors. The checking means may comprise comparison means, which are adapted to compare the at least one calculated phase current with a corresponding measured current value.

The term "measured current value" includes the case that the electric load is symmetric in the three alternating current phases, that the electric phase currents of only two of the phases are measured and the electric phase current of the third phase is calculated from the two measured phase currents and is used in the plausibility check (as "measured" value). Since the at least one phase current can repeatedly be calculated by the model at high repetition frequencies, a very fast reaction to a failure and/or malfunction is possible. In particular, the repetition frequency may be the same or even higher than the frequency of measuring the phase current (sampling frequency). The measuring frequency and the model repetition frequency are, for example, in the range of 15 to 20 kHz (e.g. 17 kHz) at an alternating current frequency of 0 to 200Hz. As a result, a reaction is possible within a time significantly shorter than the typical switching interval of the converter (approx. 1/300 Hz on the average). This allows for filtering or Fuzzy processing as described later in this document.

The present invention makes it possible to use measured current values of two of the three phases only and to perform a plausibility check for all three phases and/or for each phase separately, if the electric load is symmetric in the three phases. In particular, if an electromagnetic machine is connected to the alternating current connection in the manner of a star connected three-phase system, the current of the third phase can be calculated using the sum of the two other phase currents at every point in time, since the sum of all phase currents must be zero at the star connection. Despite that, it is possible to detect a failure with respect to each phase, in particular with respect to the third phase (including a failure of the converter) and/or a failure with the arrangements for measuring the two phase currents separately for the two phases.

Preferably, the calculated current value of each of the three phases is independently checked for plausibility. In the arrangement, this corresponds to an embodiment, wherein the checking means are connected to the modelling means and are adapted to check current values of each of the three phases independently from each other for plausibility. Such a phase selective diagnosis is not possible with the prior art described above and allows a more rapid identification of the reason for the malfunction and/or failure.

In particular when any measurement value is used in the plausibility check, it is preferred that the at least one calculated current value is stored and/or a corresponding signal is delayed before the calculated current value is used in the plausibility check. Storing the calculated current value makes it possible to use it with a delay. In the arrangement, this corresponds to an embodiment wherein the controlling device comprises a storage, adapted to store at least one calculated current value, and/or corresponds to an embodiment, wherein the controlling device comprises delay means. The delay means are connected to the modelling means and are adapted to delay a signal generated by the modelling means before the signal is used by the checking means.

Usually, measurement values have to be processed before they can be used in data processing, in particular in digital data processing. For example, the measurement value is filtered, is amplified and/or converted to a digital format. By delaying the use of the calculated current value or by delaying the corresponding signal, the time for obtaining and processing the measurement value is taken into account and the plausibility check can be performed as soon as the measurement value is available.

Generally, it is preferred to perform an offset compensation, if a measured phase current value is used in the plausibility check. The offset compensation may be performed any time before an alternating current supply of the electric load is switched on. In this situation, the phase current should be zero. If this is not the case, the corresponding measured value can be identified as an offset value and can be stored for the following measurements. Optionally, in order to eliminate variations due to noise, a plurality of offset values can be determined, e.g. the determination can repeatedly be performed over a period of time, and a mean value can be calculated and can be stored as the value for offset compensation. It is possible to intervene (in particular to prohibit the operation of the converter), if the determined offset compensation value exceeds a threshold value.

The invention makes it possible to perform a plausibility check with only two non-redundant measured phase currents. It is not necessary to use redundant current sensors or sensors with test windings and to compare the signals produced by the redundant sensors in order to check whether the signals are plausible. A non-plausible measured value will be detected by comparing it with the corresponding calculated current value, for example. As a consequence, costs for the redundant sensor(s) and the corresponding hardware for processing the sensor signal(s) can be saved. Also the overall reliability and availability is improved, in particular since one of the redundant sensors might fail, for example.

The plausibility check may be performed in different ways. According to a preferred embodiment the plausibility check comprises calculating a difference between the at least one calculated electric phase current and a comparison value. The difference, the at least one calculated electric phase current and/or the comparison value may be filtered so that transient interferences are eliminated. The plausibility check may comprise comparing the at least one calculated electric phase current with a corresponding measured current value. Furthermore, it is preferred that the at least one phase current is repeatedly measured and is repeatedly compared with the at least one calculated electric phase current.

An offset compensation (for example as described before) may be performed in every period of time, when an alternating current supply of the electric load is switched off.

An arrangement for measuring at least one of the phase currents and/or for processing such measured values may be checked for plausibility (according to at least one embodiment of the invention) every time, when the operation of the converter has been started.

For example, the at least one calculated current value is compared with a threshold value. A corresponding intervention in the operation of the converter is then performed, if the threshold value is matched and/or exceeded. In a particular embodiment of the arrangement, the checking means may comprise threshold-comparing means, which are adapted to compare an intermediate result of the checking means (e.g. the difference between a measured and a calculated phase current) with a threshold value.

The following embodiment corresponds to the best mode of the invention presently know: A defined voltage pattern between the three phases is generated by controlling the converter, starting at a defined operation state of the load. The at least one calculated electric phase current is then compared with a corresponding measured current value. In the arrangement, this corresponds to an embodiment wherein the controlling device comprises voltage pattern generating means, which are adapted to generate a defined voltage pattern between the three phases and which are connected to the control signal output for outputting a signal to the converter, wherein the output signal corresponds to the voltage pattern.

For example, if the electric load comprises an electromagnetic machine, the voltage pattern is generated when the coils of the machine are not yet magnetised (defined state), e.g. when the alternating current has been switched off and sufficient time has passed so that the coils are not magnetised in a relevant manner. Applied to railway system, wherein the electromagnetic machine is a driving motor of a railway traction vehicle, it is proposed to perform this plausibility check when the vehicle is started for the first time after a period of rest and/or repeatedly during operation of the vehicle. For example, it is possible to repeat the plausibility check every time when the vehicle reaches another section of an electric power supply network and, therefore, the alternating current supply of the machine is switched off for a short period of time.

Preferably, the voltage pattern is time constant, i.e. the voltage between each pair of the phases is kept constant. In other words: a direct current is supplied to the electric load instead of an alternating current. If the electric load comprises a coil (such as in the case of an electromagnetic machine), the constant voltage and the inductivity of the coil will result in a linearly increasing direct current as long as the magnetising process of the coil has not reached the saturation phase. Therefore, a current impulse is generated. This current impulse procedure has the advantage, that it is simple and that it can be evaluated easily by using a value calculated by the model. For example, it is only necessary to compare the measured and the calculated current value at one point of time, e.g. at a predetermined point of time. However, it is preferred to compare the values at a plurality of times.

A variety of different voltage patterns can be used. For example, the electric potential of a first of the phases may have a constant value and the electric potentials of the two other phases are zero. According to an alternative example, the electric potential of a first of the phases may have a constant positive value and the electric potentials of the two other phases may have a constant negative value. Variations of these patterns can be generated as well.

In case of asynchronous electromagnetic machines, a magnetic flux is to be generated before operating the machine. The initial flux can be generated by a controlled current surge. This current surge can be used for the plausibility check, so that it is not necessary to generate a separate current impulse. If any failure and/or malfunction is detected by evaluating the current impulse, the start of the machine can be barred. In particular, this means that the controlling device does not start the operation of the converter and damage of the machine is prevented.

As mentioned before, the mathematical model is used to calculate at least one calculated current value of at least one of the phase currents during operation of the converter. As can be recognised from the description of the current impulse method, the operation of the converter does not have to be a normal operation, e.g. when an electromagnetic machine converts electric energy to mechanical energy. Rather, the operation may be a "test operation". However, other embodiments will be described, wherein the mathematical model calculate the current value during normal operation of the electric load.

A plausibility check of the kind described before can detect any failure and/or malfunction of the phase current measurement, including measurement signal processing, any error of the parameters of the electric load, which are used by the model, and any interruption of a phase. The detection is phase selective. More generally, faulty non-symmetric behaviour of the electric load and/or faulty measurement chain will affect the measured phase currents and can therefore be detected. In particular, any gain error of the measurement signal processing and/or loose connectors can be detected.

The generation of the voltage pattern according to the current impulse method may start, for example 2 to 3 ms after the alternating current supply of the electric load has been switched off. This time should be sufficient to allow a magnetic flux of the electric load to come down to a neglectable small value.

According to a preferred variant of the current impulse method, the converter is controlled, so that a voltage between all of the three phases is or becomes zero after a specified time after starting the generation of the defined voltage pattern, or is or becomes zero when a phase current of one of the three phases has reached a specified current value. For example, all three phases are shorted on either high or low potential. For example, the specified current value is in the range of 10 % to 50 % of a nominal current value during normal operation of an electromagnetic machine. In the case of the electric load being a driving motor of a railway vehicle, the specified time may be in the range of 1 to 5 ms. Such specified values are the result of a good compromise between the time, which is needed to perform the plausibility check, and the accuracy of the plausibility check.

In principle, the plausibility check can be performed before and/or after switching the AC line voltages to zero. However, it is preferred to measure the at least one phase current, when the voltage between all of the three phases is or has become zero. Then, in particular if the electric load is an electric machine, the phase currents are declining, but are nearly time-constant compared to the preceding phases, when the defined voltage pattern is applied. As a consequence, more precise measurement values of the phase currents can be obtained and compared with calculated values.

The present invention is not limited to the case of the plausibility check being performed in a special operating situation and it is not limited to the case of the plausibility check being performed just once and/or repeatedly in the same manner. Rather, different ways of performing the plausibility check can be combined and performed with the same arrangement. For example, the current impulse method described above can be performed before starting a normal operation of the electric load and, in addition, at least one other plausibility check can be performed during normal operation of the electric load. One example of such another plausibility check is described in the following.

According to a preferred embodiment, the mathematical model uses at least one voltage between pairs of the three phases as a function of time and/or uses parameters of the electric load for the calculation of the at least one calculated current value. The term "at least one voltage between pairs of the three phases" includes the case that the model uses at least one electric potential of one of the phases and a reference potential. In particular, the model calculates the current value during normal operation of the converter.

An exemplary application of this embodiment refers to possibility that the alternating current supply to the electric load may be interrupted during normal operation. Since a controlling device, used to control the operation of the converter and, thereby, of the electric load, will react fast and impetuously, the interruption has to be detected quickly. In particular, a detection should be possible within a fraction of the alternating current period. The mathematical model is useful here as the repetition frequency of the model calculation can be very high, as mentioned above.

As mentioned earlier, the calculated current values can be compared with measured current values in order to check the respective measured current value for plausibility. However, according to a different aspect of the present invention, a measurement of the phase currents is not necessary. Rather, a threshold value is used that represents a maximum of an absolute value of one or more than one of the phase currents. The maximum is chosen so that it is not matched or exceeded during normal operation of the converter. In particular repeatedly during operation of the converter, the calculated phase current value (from the model calculation) is compared to the threshold value. It is possible to perform this comparison for two or all three phases separately. If the threshold value is matched or is matched or exceeded, an appropriate action can be taken, such as switching off the alternating current supply (e.g. switching off the converter). One advantage of this embodiment is that the comparison with a fixed value is simpler to implement and to realise than the comparison with a measured value. Despite that, the diagnosis is fast and reliable.

In at least one or more than one of the plausibility check procedures described above the plausibility check may include a special procedure for deciding whether a failure and/or malfunction exists. This special procedure can be performed in order to increase the reliability of making the decision and is referred to as "Fuzzy-evaluation" in this description. Furthermore, and the Fuzzy-evaluation can not only applied to checking the plausibility of the phase currents, but also to checking the plausibility of input quantities of the mathematical model of the electric load, such as a line voltage and/or (in case of an electric machine) the rotational speed of the machine.

It is proposed, when the plausibility check is performed, to repeatedly determine a first plausibility value, wherein the first plausibility value is an instantaneous measure of a degree of plausibility and/or non-plausibilty. Further, a second plausibility value is derived from a plurality of the first plausibility values, wherein each of the first plausibility values can influence the second plausibility value correspondingly to its degree of plausibility and/or non-plausibility. An appropriate action is taken, if the second plausibility value fulfils a predetermined criterion.

In the Fuzzy-evaluation the second plausibility value reflects the plausibility of a plurality of first plausibility values and, therefore, a faulty first plausibility value is less likely to result in an interruption of the converter operation. The effect of the Fuzzy-evaluation can be compared with the effect of an intelligent filter. Furthermore, it can easily be implemented in hardware and/or software, for example by using a counter, wherein the counter value is the second plausibility value. The term "counter" is not limited to counting integer numbers. In the example, a first plausibility value with a lower degree of plausibility results in a greater increase of the counter number than a first plausibility value with a higher degree of plausibility. Vice versa, the counter number can be decreased, if the degree of plausibility of the first plausibility value is high.

There are several features, which can be combined with this basic approach independently from each other or in combination of at least some of the features. First, the degree of plausibility of the first plausibility value can be weighted and the second plausibility value is influenced correspondingly to the weighted first plausibility value. In the simplest case, a weight factor of 1 can be used for all degrees of plausibility of the first plausibility value. However, it is as well possible to decrease the weight of the first plausibility values according to an increase of the degree of plausibility.

Second, it is possible to decide whether the degree of plausibility of the first plausibility value is equal to a lower threshold value or whether it is equal to or smaller than the lower threshold value. If this is the case, the second plausibility value is influenced to show the decreased plausibility. If this is not the case, the second plausibility value is not amended or is amended to show an increased total plausibility (e.g. the counter number is decreased).

Third, it is possible that only the effect of a limited number of most recent first plausibility values influences the second plausibility value. This means that first plausibility values, which belong to incidents that took place too long ago, do not affect the second plausibility value. Alternatively, if a counter is used for the second plausibility value, both decreasing and increasing the counter number is possible, depending on the degree of plausibility of the first plausibility value. As a result, the counter number may be decreased to zero and, in this case, incidents that took place in the past do no longer affect the second plausibility value.

In particular, the first plausibility value is a difference between a result derived from the calculated current value and a comparison value, e.g. the difference between the calculated value and the corresponding measured phase current value. In addition or alternatively, the "degree of plausibility" means that a higher deviation to a normal, an expected or a desired result has a lower degree of plausibility, for example. In the case of the difference being the first plausibility value, the degree of plausibility is lower for higher differences. For example, the predetermined criterion may be that a threshold value of the second plausibility value is matched and/or exceeded. Generally, the Fuzzy-evaluation or one of its embodiments has the following advantages:

- Small and/or rare deviations to a normal, an expected or a desired state do not necessarily result in an interruption of the converter operation.

- Large and/or many deviations to a normal, an expected or a desired state will result in a fast and reliable detection of the failure and/or malfunction.

- The procedure can easily be implemented. The parameters of the procedure, like the weight and the threshold values, can easily be adapted.

- A process, which might work at a small repetition frequency, but might be part of a higher-level control routine, can reliably check the result of the Fuzzy-evaluation, in particular check the counter number.

Furthermore, the present invention includes:

- a computer loadable data structure that is adapted to perform the method according to one of the embodiments described in this description while being executed on a computer.

Specific embodiments of the present invention will be described in the following by way of example and with reference to the accompanying drawing. The figures of the drawing schematically show:

Fig. 1    an arrangement with a converter, an alternating current side of which is connected to an electric load, in particular to an asynchronous motor;
Fig. 2    devices and units used to process a sensor signal of a sensor shown in Fig. 1;
Fig. 3    a specific embodiment of a controlling device, which can be part of the arrangement of Fig. 1 and which corresponds to the presently known best mode of the invention;
Fig. 4    a specific embodiment of checking means, which can be part of the controlling device of Fig. 3;
Fig. 5    a flow-chart illustrating a plausibility check.

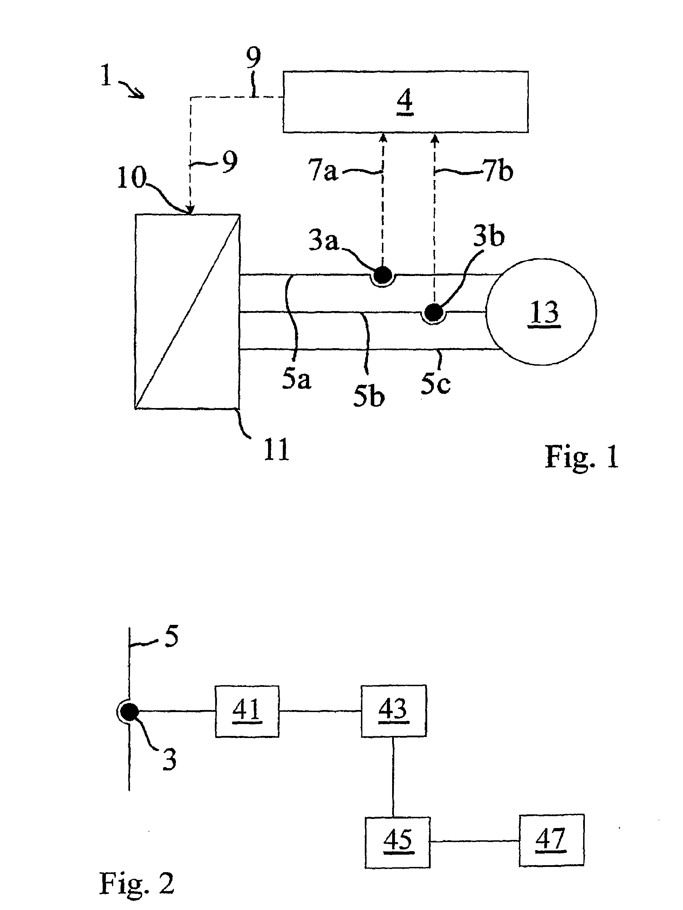

Fig. 1 shows a converter 11, which may be constructed as known from prior art. For example, the converter ma be a DC/AC current converter and may comprise three parallel paths, which connect a first and a second DC connection line of a DC intermediate circuit (not shown in the figure). Each of the paths may comprise one bridge having two electronic valves (for example Gate Turn-Off thyristors or Insulated Gate Bipolar Transistors, IGBTs), which are connected in series to each other. In each case one phase 5a, 5b, 5c of an AC connection may be connected to a connecting point between the two electronic valves. Furthermore, in each case one diode may be connected antiparallel to the electronic valves. Input signal lines of the electronic valves for receiving control signals, in particular PWM signals, can be connected to a control signal input 10 of the current converter. The control signal input 10 is connected to a control signal output of a controlling device 4 of the arrangement 1. The DC side of the current converter may be connected to a second converter, which is adapted to output a DC current to the current converter. An input side of the second converter may be connected to a power supply network, for example a single-phase alternating current network of a railway system. However, other configurations and operations are possible, such as feeding back electric energy from the current converter to the second converter.

As shown in Fig. 1 the three phases 5a, 5b, 5c of the AC connection connect the converter 11 to an electric load 13, in particular to an asynchronous motor, which may be the driving motor of a railway traction vehicle.

A first 5a and a second 5b of the phases 5a, 5b, 5c are combined, in each case, with only one current sensor 3a, 3b for measuring the phase current. Since the electric load 13 is symmetric in the three phases 5a, 5b, 5c, the third phase 5c is not combined with a current sensor. However, it is possible to calculate the phase current of the third phase 5c according to the following equation:

$$Ic = - (Ia + Ib),$$

wherein Ia, Ib, Ic are the respective currents of the three phases 5a, 5b, 5c.

The current sensors 3a, 3b are connected, in each case, to the controlling device 4 via a sensor signal connection 7a, 7b.

In high-power applications, such as in railway traction vehicles, the current sensor function may be based on the principle of detecting a current by evaluating the magnetic field produced by the current flow. An example of such a current sensor 3 and a corresponding arrangement for processing the sensor signal is shown in Fig. 2. The current sensor 3 is attached to one phase 5 and generates a current signal, which corresponds to the current carried by the phase 5. A signal line for outputting the sensor signal is connected to a current/voltage converter 41 for converting the current signal to a voltage signal. The current/voltage converter 41 is optionally connected to a filter 43 for filtering the voltage signal in order to eliminate signal parts, which are the result of transient interferences, and in order to eliminate noise. An output of the filter 43 is connected to an input of an amplifier 45 for amplifying the voltage signal. If the filter 43 is not provided, the output of the current/voltage converter 41 may be directly connected to the amplifier 45.

According to prior art solutions a comparator may be provided between the current/voltage converter 41 and the amplifier 45, for example between the filter 43 and the amplifier 45. The comparator may be used to compare the measured phase current with a phase current measured by a redundant current sensor.

An output of the amplifier 45 is connected to an analogue to digital (A/D) converter for digitising the voltage signal. The digitised signal can be used for digital data processing, in particular performed by a computer of a controlling device 4 shown in Fig. 1. For example, the devices 41, 43, 45, 47 of the arrangement shown in Fig. 2 may be arranged between the current sensor 3a or 3b and a signal input of the controlling device 4. Alternatively, at least some of the devices 41, 43, 45, 47 may be part of the controlling device 4.

During operation of the converter 11, the controlling device 4 for controlling the converter 11 uses phase current values, which are based on the measurement performed by the current sensors 3a, 3b.

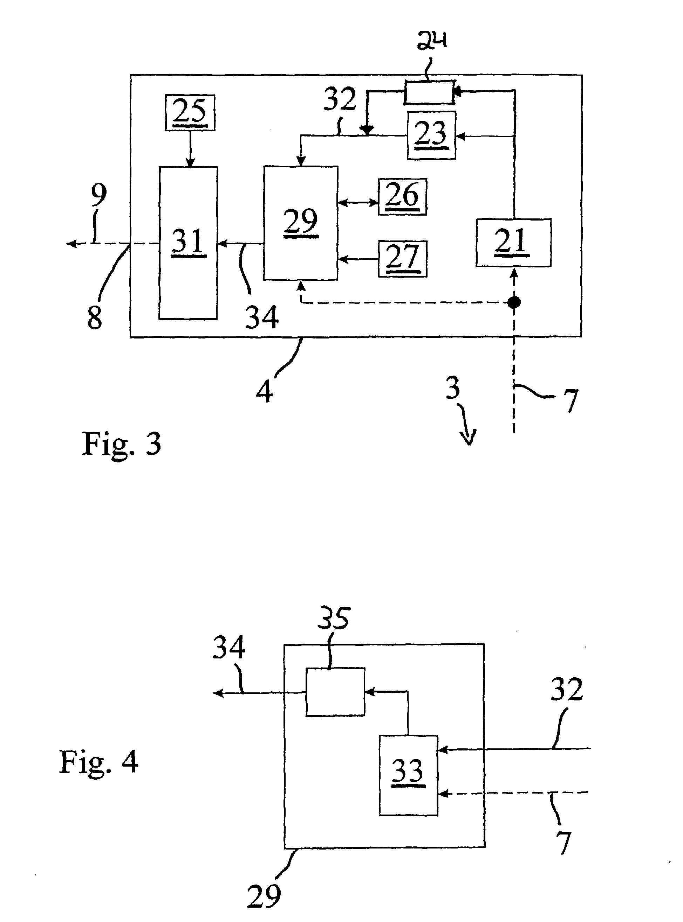

The controlling device 4 may be constructed and/or arranged as shown in Fig. 3. In particular, the signal processing functions of the controlling device units, which will be described in the following, may be performed using hardware and/or software. At least some of the functions can be performed by the same hardware unit (e.g. a central processing unit) and/or the same software. For example, model calculations for modelling the operation of the electric load 13 and the plausibility check can be performed by a central processing unit of the controlling device 4.

According to the arrangement shown in Fig. 3, the controlling device 4 is connected via the sensor signal connection 7 to the current sensors 3. During operation, the sensor signals are transferred to checking means 29 of the controlling device 4 and, optionally, to modelling means 21. The modelling means 21, which are adapted to model the operation of the electric load 13, are connected to the checking means 29 via a signal line 32. Optionally, delay means 23 for delaying an output signal of the modelling means 21 are arranged on the signal line 32.

In particular, the output signal represents at least one calculated current value of the phases 5a, 5b, 5c. The purpose of the delay means 23 is to delay the output signal correspondingly to the delay time, which is needed for measuring the phase currents of the phases 5a, 5b and for processing the measurement signals before arrival at the checking means 29. However, an alternative way to take the delay time into account is at least temporarily storing the at least one calculated value in a data storage 26, which is connected to the checking means 29. In this case, an additional connection between the modelling means 21 and the storage 26 may be realised.

According to a further optional embodiment, threshold comparing means 24 are connected to an output of the modelling means 21. An output of the threshold comparing means 24 is connected to an input of the checking means 29. The threshold comparing means 24 are adapted to repeatedly compare an output signal representing a phase current value with a threshold value. In particular, the threshold value corresponds to a maximum of an absolute value of the phase current to be compared. The maximum is chosen to be a limit for normal operation of the converter 11.

In a specific embodiment, the controlling device 4 may comprise a timer 27 for starting a plausibility check routine a specified time after starting an operation of the converter 11, e.g. after generating a defined voltage pattern between the three phases (current impulse method). The timer 27 may be connected to the checking means 29.

Further connections of the controlling device 4, such as to a measurement device for measuring a voltage on the DC side of the converter 11 (e.g. the DC intermediate circuit voltage) to a rotational speed sensor of the electromagnetic machine, and/or to inputting means for inputting parameters of the electric load 13 may exist.

An output of the checking means 29 is connected to output means 31 of the controlling device 4. The purpose of the output means 31 is to generate appropriate output signals for the converter 11, for example PWM signals, and to output the signals via the control signal output 8 of the controlling device 4. The output means 31 may be a standard PWM signal generator.

As shown in Fig. 4, the checking means 29 may comprise a comparator 33 for comparing at least one calculated phase current value with a corresponding measured phase current value. An input of the comparator 33 is connected to an output of the modelling means 21 via the signal line 32 and is connected to at least one current sensor via the sensor signal connection 7. In the particular embodiment shown, an output of the comparator 33 is connected to threshold comparing means 35 for comparing an output value of the comparator (such as the difference between the calculated and the measured phase current) with a threshold value. For example, the threshold comparing means 35 may be adapted to decide whether the threshold value is matched and/or exceeded.

Optionally, the measurement values of the phases 5a, 5b are input to the modelling means 21, e.g. for triggering and/or synchronising the modelling process by/with measurement. In this case, voltage pattern generation means 25 may additionally be provided for controlling an operation of the output means 31 and, thereby, generating output signals, which correspond to the desired voltage pattern. The voltage pattern generation means 25 may directly be connected to the output means 31.

Generally, it is possible to provide the voltage pattern generation means 25 or equivalent controlling means for controlling the operation of the output means 31 and to connect the modelling means 21 to the controlling means, so that the modelling means 21 can control the operation of the converter 11, depending on the result of the model calculation.

A first example of the operation of the controlling device will be described in the following. The first example is referred to the case that the electric load is an electromagnetic machine. The procedure starts when the coils of the machine are not magnetised. The voltage pattern generating means 25 generate a voltage pattern signal, which corresponds to constant voltages between the phases 5a, 5b, 5c for a defined period of time (e.g. 2 ms). The voltage pattern signal is received by the output means 31 that output corresponding control signals to the converter 11. In the case of electronic valves, which are controlled by PWM signals, the output means 31 switch on at least one of the electronic valves at the beginning of the defined period and switch of the at least one of the electronic valves at the end of the defined period.

As a result of the constant voltage, phase currents carried by the corresponding phases and by the corresponding coil of the electromagnetic machine increase linearly until the end of the defined period. The modelling means 21 start modelling the operation of the electromagnetic machine at the beginning of the defined period and continue the modelling until after the end of the defined period. Two of the phase currents are measured by the current sensors 3a, 3b and the third phase current is calculated. The three resulting "measured" current values are compared at least at one point of time after the end of the defined period with the current values calculated by the modelling means. Preferably, the plausibility check at this at least one point of time is triggered by the timer 27, which outputs a corresponding trigger signal to the checking means 29.

The comparator 33 calculates the difference between each of the calculated current values and the corresponding measured current value. If the threshold comparing means 35 detects that one of the differences is greater than a predetermined threshold value, it outputs an inhibiting signal to the output means 31, which inhibits any further operation of the converter. In other words: the alternating current and, thereby, the electromagnetic machine are switched off until the situation has been analysed. After a reset of the controlling device 4, the described plausibility check procedure may be repeated.

If the threshold is not exceeded, the normal operation of the electromagnetic machine can be initiated.

A second example of the operation of the controlling device will be described in the following. During normal operation of the electromagnetic machine, the modelling means 21 continuously calculate expected values of the phase currents and the threshold comparing means 35 continuously check whether a difference between one of the calculated phase currents and the corresponding measured phase current exceeds the threshold value. If the threshold value is exceeded, the operation of the electromagnetic machine is immediately stopped. Alternatively, the comparator 33 continuously calculates the difference for each of the phase currents and the three differences are separately used as input quantities of the Fuzzy-evaluation procedure, which is described in more detail below.

For example, the controlling device 4 may be operated performing consecutive working cycles at constant (or variable) cycle duration. This working cycle applies at least to sampling the measurement signals of the measured phase currents and the model calculation. Furthermore the plausibility check and/or the process for controlling the operation of the converter can be performed within the same working cycle or at the same frequency. However, it is sufficient to perform the controlling process at a lower frequency. In a specific embodiment, the cycle duration may be in the range of 50 to 70 µs.

In any case, the controlling process should be significantly faster and performed at a higher frequency than the (average) frequency of outputting control signals from the controlling device 4 to the converter 11. Furthermore, the basic frequency of the alternating current, which might be in the range of 0 to 250Hz in the case of providing electric energy from the converter to an asynchronous driving motor of a railroad traction vehicle, should be smaller than the (average) frequency of outputting the control signals (possibly in the range of 300 Hz or higher in the case of the asynchronous driving motor).

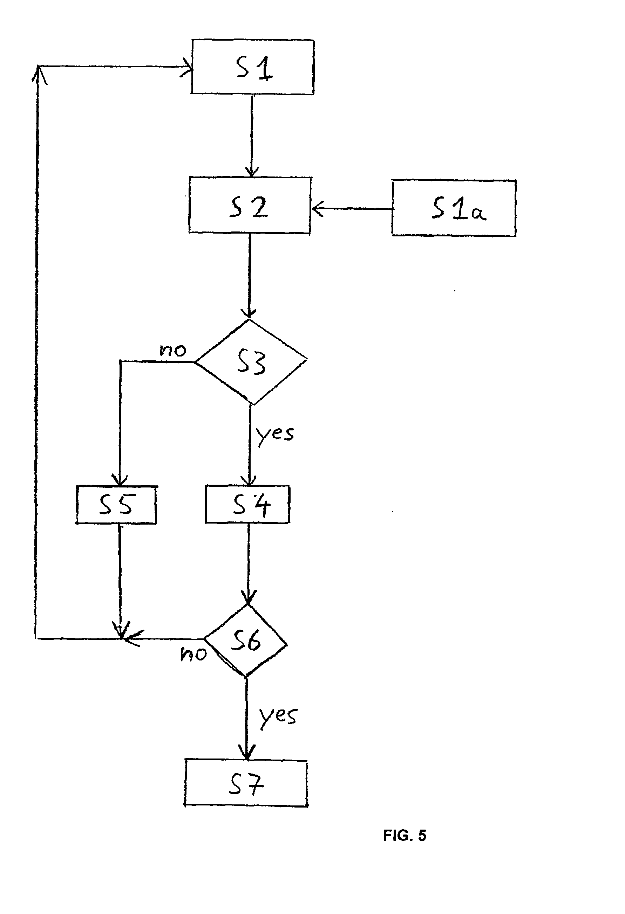

An exemplary way of performing the Fuzzy-evaluation is described in the following with reference to Fig. 5. In step S 1 the model of the electric load, in particular of the asynchronous motor, calculates a value of one of the phase currents. In step S1a a corresponding value of the phase current is measured and processed. The measured and the calculated value are transferred to a comparator, which compares the two values in step S2. In particular, the comparator calculates the difference between the two values and, optionally, generates the absolute value of the difference. The difference or its absolute value is compared in step S3 with a threshold value, e.g. by the threshold comparing means. If the threshold value is exceeded, the procedure continues with step S4, wherein a counter value is increased by the amount, by which the difference exceeds the threshold value. If the threshold value is not exceeded, the procedure continues with step S5, wherein the counter value is decreased by a constant amount. After step S5, the procedure returns to the beginning and continues with step S 1.

After step S4, the procedure continues with step S6, wherein a decision is made whether the counter value matches a second threshold value or whether it matches or exceeds the second threshold value. If this is the case, it is decided that there is a failure and/or malfunction and an appropriate action is taken in step S7. If the second threshold value is not exceeded, the procedure returns to the beginning and continues with step S 1.

The procedure described above can be performed for two or three of the phases separately. In particular, the counter or counters can be implemented by software or hardware. Furthermore, it is possible to modify the procedure. For example, the counter value may be decreased in step S5 by an amount that depends on the operation state.

**Claims**

1. A method of monitoring an operation of a converter (11), in particular a current converter for delivering electric energy to a driving motor of a rail vehicle, wherein:

    - the converter (11) comprises an alternating current side with three alternating current phases,
    - an electric load (13) is connected to the three alternating current phases,
    - electric phase currents of at least two of the phases are measured and corresponding measured current values are used to control the operation of the converter (11),
    - a mathematical model, which is capable of modelling an operation of the electric load (13), is used to calculate at least one calculated current value of at least one of the phase currents during operation of the converter (11) and
    - it is checked by using the at least one calculated current value whether at least one of the electric phase currents and/or a corresponding measured current value is plausible and/or is leading to plausible results of the operation of the converter (11).

    wherein, when the plausibility check is performed, a first plausibility value, which is a difference between the calculated current value and the corresponding measured phase current value, is repeatedly determined, wherein a degree of plausibility of the first plausibility value is lower for higher differences between the calculated current value and the corresponding measured phase current value, wherein a second plausibility value is derived from a plurality of the first plausibility values related to the same phase, wherein each of the plurality of first plausibility values can influence the second plausibility value correspondingly to its degree of plausibility and wherein an action is taken, if the second plausibility value fulfils a predetermined criterion.

2. The method of claim 1, wherein the electric load is symmetric in the three alternating current phases, wherein electric phase currents of only two of the phases are measured and wherein the electric phase current of the third phase is calculated from the two measured phase currents and is used in the plausibility check.

3. The method of one of claims 1 to 2, wherein the plausibility check comprises comparing the at least one calculated electric phase current with a corresponding measured current value.

4. The method of claims 3, wherein the at least one phase current is repeatedly measured and is repeatedly compared with the at least one calculated electric phase current within a period of an ARC frequency of an alternating current carried by the three phases.

5. A computer loadable data structure, that is adapted to perform the method according to one of the preceding method claims while being executed on a computer.

6. An arrangement (1) for monitoring an operation of a converter (11), in particular a current converter for delivering electric energy to a driving motor of a rail vehicle, the arrangement comprising:

    - a controlling device (4) for controlling the operation of the converter (11), wherein the controlling device (4) comprises on an output side a control signal output (8) for outputting control signals to the converter (11),
    - a three-phase alternating current connection (5), which is adapted to connect the converter (11) and an electric load (13),
    - at least two sensors (3a, 3b) for measuring electric phase currents of at least two of the phases of the three-phase alternating current connection (5), wherein the sensors (3) are connected to an input of the controlling device (4),

wherein the controlling device (4) comprises modelling means (21), which are adapted to model an operation of the electric load (13) and are adapted to calculate, based on the modelling, at least one calculated current value of at least one of the phase currents during operation of the converter (11), and comprises checking means (29), which, by using the at least one calculated current value, are adapted to check whether at least one of the electric phase currents and/or a corresponding measured current value is plausible and/or is leading to plausible results of the operation of the converter. (11),

and wherein the controlling device (4) is adapted, when the plausibility check is performed, to repeatedly determine a first plausibility value, which is a difference between the calculated current value and the corresponding measured phase current value, wherein a degree of plausibility of the first plausibility value is lower for higher differences between the calculated current value and the corresponding measured phase current value, and to derive a second plausibility value from a plurality of the first plausibility values related to the same phase, wherein each of the first plausibility values can influence the second plausibility value correspondingly to its degree of plausibility and/or non-plausibility.

7. The arrangement of claim 6, wherein the checking means (29) are connected to the modelling means (21) and are adapted to check current values of each of the three phases independently atom each other for plausibility.

8. The arrangement of claim 6 or 7, wherein the checking means (29) are connected to the modelling means (21) and to the at least two sensors (5a, 5b).

9. The arrangement of one of claims 6 to 8, wherein the controlling device (4) comprises a storage (26), which is adapted to store at least one calculated current value.

10. The arrangement of one of claims 6 to 9, wherein the controlling device (4) comprises delay means (23), which are connected to the modelling means (21) and which is adapted to delay a signal generated by the modelling means (21) before the signal is used by the checking means (29).

**Patentansprüche**

1. Verfahren zum Überwachen eines Betriebes eines Umrichters (11), insbesondere eines Stromrichters zum Versorgen eines Antriebsmotors eines Schienenfahrzeugs mit elektrischer Energie, wobei:

   - der Umrichter (11) eine Wechselstromseite mit drei Wechselstromphasen aufweist,
- eine elektrische Last (13) mit den drei Wechselstromphasen verbunden ist,
- elektrische Phasenströme von zumindest zwei der Phasen gemessen werden und entsprechende gemessene Stromwerte verwendet werden, den Betrieb des Umrichters (11) zu steuern,
- ein mathematisches Modell, das in der Lage ist, einen Betrieb der elektrischen Last (13) zu modellieren, dazu verwendet wird, zumindest einen berechneten Stromwert vom zumindest einem der Phasenströme während des Betriebes des Umrichters (11) zu berechnen, und
- indem der zumindest eine berechnete Stromwert verwendet wird, überprüft wird, ob zumindest einer der elektrischen Phasenströme und/ oder ein entsprechender gemessener Stromwert plausibel ist und/oder zu plausiblen Ergebnissen des Betriebes des Umrichters (11) führt,

wobei, wenn die Plausibilitätsprüfung durchgeführt wird, ein erster Plausibilitätswert, der eine Differenz zwischen dem berechneten Stromwert und dem entsprechenden gemessenen Phasenstromwert ist, wiederholt bestimmt wird, wobei ein Grad der Plausibilität des ersten Plausibilitätswertes für größere Differenzen zwischen dem berechneten Stromwert und dem entsprechenden gemessenen Phasenstromwert niedriger ist, wobei ein zweiter Plausibilitätswert von einer Mehrzahl der ersten Plausibilitätswerte, die auf dieselbe Phase bezogen sind, abgeleitet wird, wobei jeder der Mehrzahl von ersten Plausibilitätswerten den zweiten Plausibilitätswert entsprechend seinem Grad der Plausibilität beeinflussen kann und wobei eine Handlung unternommen wird, falls der zweite Plausibilitätswert ein vorgegebenes Kriterium erfüllt.

2. Verfahren nach Anspruch 1, wobei die elektrische Last in den drei Wechselstromphasen symmetrisch ist, wobei elektrische Phasenströme von lediglich zwei der Phasen gemessen werden und wobei der elektrische Phasenstrom der dritten Phase aus den zwei gemessenen Phasenströmen berechnet wird und bei der Plausibilitätsprüfung verwendet wird.

3. Verfahren nach einem der Ansprüche 1 bis 2, wobei die Plausibilitätsprüfung ein Vergleichen des zumindest einen berechneten elektrischen Phasenstromes mit einem entsprechenden gemessenen Stromwert aufweist.

4. Verfahren nach Anspruch 3, wobei der zumindest eine Phasenstrom wiederholt gemessen wird und wiederholt mit dem zumindest einen berechneten elektrischen Phasenstrom innerhalb einer Periode einer AC-Frequenz eines durch die drei Phasen geführten Wechselstromes verglichen wird.

**5.** Computer-ladbare Datenstruktur, die ausgestaltet ist, das Verfahren nach einem der vorhergehenden Verfahrensansprüche auszuführen, während sie auf einem Computer ausgeführt wird.

**6.** Anordnung (1) zum Überwachen eines Betriebes eines Umrichters (11), insbesondere eines Stromrichters zum Versorgen eines Antriebsmotors eines Schienenfahrzeugs mit elektrischer Energie, wobei die Anordnung aufweist:

- eine Steuereinrichtung (4) zum Steuern des Betriebes des Umrichters (11), wobei die Steuereinrichtung (4) an einer Ausgangsseite einen Steuersignalausgang (8) zum Ausgeben von Steuersignalen zu dem Umrichter (11) aufweist,
- eine Dreiphasen-Wechselstromverbindung (5), die ausgestaltet ist, den Umrichter (11) und eine elektrische Last (13) zu verbinden,
- zumindest zwei Sensoren (3a, 3b) zum Messen elektrischer Phasenströme von zumindest zwei der Phasen der Dreiphasen-Wechselstromverbindung (5), wobei die Sensoren (3) mit einem Eingang der Steuereinrichtung (4) verbunden sind,

wobei die Steuereinrichtung (4) Modellierungsmittel (21) aufweist, die ausgestaltet sind, einen Betrieb der elektrischen Last (13) zu modellieren, und ausgestaltet sind, basierend auf der Modellierung zumindest einen berechneten Stromwert zumindest einer der Phasenströme während des Betriebes des Umrichters (11) zu berechnen, und wobei die Steuereinrichtung (4) Prüfmittel (29) aufweist, die, indem der zumindest eine berechnete Stromwert verwendet wird, ausgestaltet sind zu prüfen, ob der zumindest eine der elektrischen Phasenströme und/oder ein entsprechender gemessener Stromwert plausibel ist und/oder zu plausiblen Ergebnissen des Betriebes des Umrichters (11) führt, und wobei die Steuereinrichtung (4) ausgestaltet ist, wenn die Plausibilitätsprüfung durchgeführt wird, wiederholt einen ersten Plausibilitätswert zu bestimmen, der eine Differenz zwischen dem berechneten Stromwert und dem entsprechenden gemessenen Phasenstromwert ist, wobei ein Grad der Plausibilität des ersten Plausibilitätswertes für größere Differenzen zwischen dem berechneten Stromwert und dem entsprechenden gemessenen Phasenstromwert kleiner ist, und einen zweiten Plausibilitätswert aus einer Mehrzahl der ersten Plausibilitätswerte, die auf dieselbe Phase bezogen sind, abzuleiten, wobei jeder der ersten Plausibilitätswerte den zweiten Plausibilitätswert entsprechend seines Grades der Plausibilität und/oder Nicht-Plausibilität beeinflussen kann.

**7.** Anordnung nach Anspruch 6, wobei die Prüfmittel (29) mit den Modellierungsmitteln (21) verbunden sind und ausgestaltet sind, aktuelle Werte von jeder der drei Phasen unabhängig voneinander auf Plausibilität zu prüfen.

**8.** Anordnung nach Anspruch 6 oder 7, wobei die Prüfmittel (29) mit den Modellierungsmitteln (21) und mit den zumindest zwei Sensoren (5a, 5b) verbunden sind.

**9.** Anordnung nach einem der Ansprüche 6 bis 8, wobei die Steuereinrichtung (4) einen Speicher (26) aufweist, der ausgestaltet ist, zumindest einen der berechneten Stromwerte zu speichern.

**10.** Anordnung nach einem der Ansprüche 6 bis 9, wobei die Steuereinrichtung (4) Verzögerungsmittel (23) aufweist, die mit den Modellierungsmitteln (21) verbunden sind und die ausgestaltet sind, ein Signal, das von den Modellierungsmittel (21) erzeugt wird, zu verzögern, bevor das Signal durch die Prüfmittel (29) verwendet wird.

## Revendications

**1.** Procédé consistant à surveiller un fonctionnement d'un convertisseur (11), en particulier un convertisseur de courant destiné à distribuer une énergie électrique à un moteur d'entraînement d'un véhicule de chemin de fer, dans lequel :

le convertisseur (11) comprend un côté de courant alternatif avec trois phases de courant alternatif,
une charge électrique (13) est connectée aux trois phases de courant alternatif,
des courants de phases électriques d'au moins deux des phases sont mesurés et des valeurs de courant mesurées correspondantes sont utilisées pour commander le fonctionnement du convertisseur (11),
un modèle mathématique, qui est capable de modéliser un fonctionnement de la charge électrique (13), est utilisé pour calculer au moins une valeur de courant calculée d'au moins un des courants de phase au cours du fonctionnement du convertisseur (11) et
il est contrôlé, en utilisant l'au moins une valeur de courant calculée, si au moins un des courants de phase électriques et/ou une valeur de courant mesurée correspondante est plausible et/ou conduit à un résultat plausible du fonctionnement du convertisseur (11),
dans lequel, lorsque le contrôle de plausibilité est réalisé, une première valeur de plausibilité, qui est une différence entre la valeur de courant calculée et la valeur de courant de phase mesurée correspondante, est déterminée à plusieurs reprises, dans lequel un degré de plausibilité de la première valeur de plausibilité est inférieur pour des différences plus importantes entre la valeur de courant calculée et la valeur de courant de phase mesurée correspondante, dans lequel une seconde valeur de plausibilité est dérivée d'une pluralité des premières valeurs de plausibilité connexes à la même phase, dans lequel chacune parmi la pluralité des premières valeurs de plausibilité peut influencer la seconde valeur de plausibilité proportionnellement à son degré de plausibilité et dans lequel une action est prise si la seconde valeur de plausibilité satisfait un premier critère.

2. Procédé selon la revendication 1, dans lequel la charge électrique est symétrique dans les trois phases de courant alternatif, dans lequel les courants de phases électriques de seulement deux des phases sont mesurés et dans lequel le courant de phase électrique de la troisième phase est calculé à partir des deux courants de phase mesurés et est utilisé dans le contrôle de plausibilité.

3. Procédé selon une des revendications 1 à 2, dans lequel le contrôle de plausibilité comprend l'étape consistant à comparer au moins un courant de phase électrique calculé à une valeur de courant mesurée correspondante.

4. Procédé selon la revendication 3, dans lequel l'au moins un courant de phase est mesuré et est comparé à plusieurs reprises à un courant de phase électrique calculé au sein d'une période d'une fréquence CA d'un courant alternatif transporté par les trois phases.

5. Structure de données chargeable par ordinateur qui est adaptée pour réaliser le procédé selon une des revendications de procédé précédentes tout en étant exécutée sur un ordinateur.

6. Agencement (1) destiné à surveiller un fonctionnement d'un convertisseur (11), en particulier un convertisseur de courant destiné à distribuer une énergie électrique à un moteur d'entraînement d'un véhicule de chemin de fer, l'agencement comprenant :

   un dispositif de commande (4) destiné à commander le fonctionnement du convertisseur (11), dans lequel le dispositif de commande (4) comprend, sur un côté de sortie, une sortie de signal de commande (8) destinée à envoyer des signaux de commande au convertisseur (11), une connexion de courant alternatif triphasé (5), qui est adaptée pour connecter le convertisseur (11) et une charge électrique (13), au moins deux capteurs (3a, 3b) destinés à mesurer des courants de phases électriques d'au moins deux des phases de la connexion de courant alternatif triphasé (5), dans lequel les capteurs (3) sont connectés à une entrée du dispositif de commande (4), dans lequel le dispositif de commande (4) comprend des moyens de modélisation (21), qui sont adaptés pour modéliser un fonctionnement d'une charge électrique (13) et sont adaptés pour calculer, sur la base de la modélisation, au moins une valeur de courant calculée d'au moins un des courants de phase au cours du fonctionnement du convertisseur (11), et comprend des moyens de contrôle (29), qui, en utilisant l'au moins une valeur de courant calculée, sont adaptés pour contrôler si au moins un des courants de phases électriques et/ou une valeur de courant mesurée correspondante est plausible et/ou conduite à un résultat plausible du fonctionnement du convertisseur (11), et dans lequel le dispositif de commande (4) est adapté, lorsque le contrôle de plausibilité est réalisé, pour déterminer à plusieurs reprises une première valeur de plausibilité, qui est une différence entre la valeur de courant calculée et la valeur de courant de phase mesurée correspondante, dans lequel un degré de plausibilité de la première valeur de plausibilité est inférieure pour des différences plus importantes entre la valeur de courant calculée et la valeur de courant de phase mesurée correspondante, et pour dériver une seconde valeur de plausibilité à partir d'une pluralité des premières valeurs de plausibilité connexes à la même phase, dans lequel chacune des premières valeurs de plausibilité peut influencer la seconde valeur de plausibilité proportionnellement à son degré de plausibilité et/ou non-plausibilité.

7. Agencement selon la revendication 6, dans lequel les moyens de contrôle (29) sont connectés aux moyens de modélisation (21) et sont adaptés pour contrôler des valeurs de courant de chacune des trois phases indépendamment les unes des autres pour déterminer la plausibilité.

8. Agencement selon la revendication 6 ou 7, dans lequel les moyens de contrôle (29) sont connectés aux moyens de modélisation (21) et aux au moins deux capteurs (5a, 5b).

9. Agencement selon les revendications 6 à 8, dans lequel les moyens de commande (4) comprennent un stockage (26), qui est adapté pour stocker au moins une valeur de courant calculée.

**10.** Agencement selon l'une quelconque des revendications 6 à 9, dans lequel le dispositif de commande (4) comprend des moyens à retard (23), qui sont connectés aux moyens de modélisation (21) et qui sont adaptés pour retarder un signal généré par les moyens de modélisation (21) avant que le signal ne soit utilisé par les moyens de contrôle (29).

1

9

10

9

4

7a 7b

3a 3b

13

5a 5b 5c

11

Fig. 1

5

3

41 43

45 47

Fig. 2

Fig. 3

Fig. 4

**FIG. 5**

**REFERENCES CITED IN THE DESCRIPTION**

**Patent documents cited in the description**

- US 6242873 B

- DE 19531771 A1